(19) Europäisches Patentamt
European Patent Office
Office européen des brevets

(11) EP 2 270 564 B1

(12) FASCICULE DE BREVET EUROPEEN

(45) Date de publication et mention de la délivrance du brevet:
**12.04.2017 Bulletin 2017/15**

(51) Int Cl.:
***G02B 6/44*** *(2006.01)*

(21) Numéro de dépôt: **10167132.9**

(22) Date de dépôt: **24.06.2010**

# (54) Câble de communication optique

Optisches Kommunikationskabel

Optical communication cable

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **24.06.2009 FR 0954313**

(43) Date de publication de la demande:
**05.01.2011 Bulletin 2011/01**

(73) Titulaire: **ACOME, Société Coopérative et Participative,**
**Société Anonyme coopérative de production à capital variable**
**75014 Paris (FR)**

(72) Inventeurs:
- **Lallinec, Patrice**
**14500 MAISONCELLES LA JOURDAN (FR)**
- **Herve, Olivier M.**
**35300 FOUGERES (FR)**

(74) Mandataire: **Regimbeau**
**20, rue de Chazelles**
**75847 Paris Cedex 17 (FR)**

(56) Documents cités:

| | |
|---|---|
| **EP-A1- 1 310 814** | **DE-U1- 20 317 984** |
| **US-A- 4 826 278** | **US-A- 5 157 752** |
| **US-A- 5 633 075** | **US-A1- 2007 263 964** |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 270 564 B1

## Description

DOMAINE DE L'INVENTION

L'invention concerne un câble de communication, du type comprenant une gaine de protection renfermant une âme optique de transmission de signaux de données optiques.

ETAT DE LA TECHNIQUE

On connaît des câbles de communication comprenant une gaine de protection et une âme optique de transmission s'étendant à l'intérieur de la gaine de protection. L'âme optique est formée d'un faisceau composé d'une pluralité d'éléments optiques de transmission. Ces éléments optiques peuvent prendre par exemple la forme de fibres optiques nues ou de fibres optiques munies d'une enveloppe de protection.

Le raccordement d'un abonné à un réseau optique nécessite de réaliser une opération de dérivation d'un ou plusieurs éléments optiques à partir d'un câble optique principal.

Il existe plusieurs techniques pour réaliser une opération de dérivation.

Une première technique connue consiste à enlever la gaine de protection du câble sur une longueur légèrement supérieure à la longueur de la portion d'élément que l'on souhaite dériver. L'élément à dériver est ensuite sélectionné et coupé pour pouvoir être extrait.

Un inconvénient de cette première technique est qu'elle nécessite d'enlever la gaine sur une grande longueur de câble, ce qui interrompt la protection des éléments procurée par la gaine. La protection doit ensuite être reconstituée afin de rétablir l'intégrité mécanique du câble.

Le document FR 2 810 747 A1 décrit un câble optique à accessibilité continue, comprenant une gaine de protection de section ovale entourant une cavité présentant en coupe transversale deux axes sensiblement perpendiculaires se croisant au centre de la cavité, et au moins deux fibres optiques en au moins deux modules. Les fibres optiques sont organisées de façon telle qu'elles occupent la majeure partie de la cavité dans un axe mais qu'elles laissent un jeu important dans l'autre axe de la cavité. Le jeu laissé dans la cavité facilite l'accès aux fibres optiques.

Lors de l'installation de ce câble, il est possible d'accéder de façon continue, c'est-à-dire à n'importe quel endroit du câble, aux fibres optiques contenues dans la gaine.

L'opération de dérivation consiste alors à réaliser une première fenêtre locale d'accès (sur quelques centimètres) dans la gaine de protection grâce à un outil tranchant, à l'endroit choisi pour la dérivation. Puis, une deuxième fenêtre locale d'accès est réalisée dans la gaine de protection, à une distance de la première fenêtre. Cette distance est choisie en fonction de la longueur de la portion d'élément optique que l'on souhaite dériver. Cette longueur peut aller de quelques dizaines de centimètres à plusieurs mètres. Il suffit alors d'accéder à l'élément optique choisi par la deuxième fenêtre, de le couper, puis de l'extraire par la première fenêtre. Après dérivation, il est possible de refermer chacune des fenêtres par fixation de couvercles sur la gaine du câble.

Cette deuxième technique évite de réaliser un enlèvement de la gaine du câble sur une grande longueur, mais nécessite néanmoins de pouvoir accéder au câble à chacun des endroits préconisés pour réaliser les fenêtres.

Une troisième technique mise au point par la demanderesse consiste à réaliser une fenêtre locale unique dans la gaine de protection à l'endroit désigné pour la dérivation. Puis, un élément optique est choisi et un élément de guidage est inséré à l'intérieur de la gaine le long de l'élément optique choisi. L'élément de guidage permet d'acheminer un élément de coupe jusqu'à un site de coupe situé à une distance de la fenêtre sensiblement égale à la longueur de l'élément optique que l'on souhaite dériver. L'élément de coupe est actionné pour provoquer la coupe de l'élément optique à l'endroit du site de coupe. Une portion de l'élément optique peut ensuite être extraite par la fenêtre.

Cette troisième technique présente l'avantage de ne nécessiter la réalisation que d'une seule fenêtre localisée dans la gaine du câble.

En parallèle, la structure des câbles optiques évolue afin d'obtenir des câbles optiques de plus en plus compacts, c'est-à-dire des câbles optiques qui, à nombre constant d'éléments optiques, présentent un encombrement de plus en plus réduit.

Dans de tels câbles, les éléments optiques occupent une proportion importante de la cavité interne délimitée par la gaine de protection (par « proportion importante », on entend dans le cadre de la présente demande, une proportion supérieure à environ 30% du volume de la cavité interne). De ce fait, les éléments optiques sont susceptibles d'être soumis à des contraintes de traction ou de compression dans les zones dans lesquels le câble est courbé.

Une solution connue pour limiter des contraintes s'exerçant sur les éléments optiques consiste à câbler les éléments optiques entre eux de manière à former un faisceau compact à l'intérieur de la gaine de protection. Le câblage consiste à assembler les éléments optiques entre eux en les torsadant ensemble. Quelque soit le taux d'occupation des éléments optiques dans la cavité interne délimitée par la gaine de protection, le câblage contribue à l'homogénéisation des longueurs des éléments optiques.

Un tel câblage est généralement considéré comme indispensable dans des câbles optiques compacts dans lesquels les éléments optiques occupent plus d'environ 50% de la cavité interne.

Les éléments optiques peuvent notamment être câblés entre eux selon un câblage dit « en SZ », dans lequel les éléments sont torsadés ensemble alternativement dans un sens puis dans l'autre. Le câblage en SZ permet de répartir les surlongueurs des éléments et de former un assemblage compact.

Dans ce cas, les éléments optiques sont maintenus assemblés entre eux grâce à un ou plusieurs filin(s) de maintien enroulé(s) autour du faisceau d'éléments optiques. Le filin est généralement constitué d'une mèche de polyester, d'aramide, de polyamide ou de polypropylène. D'autres matériaux sont parfois utilisés tels que les fibres naturelles. La mèche peut elle-même être formée d'un ou plusieurs brin(s).

Cependant, dans ces câbles compacts, la présence du filin peut rendre difficile l'extraction d'un élément optique, en particulier lorsque la longueur de l'élément à extraire est importante.

En effet, le filin qui maintient les éléments optiques entre eux à tendance à gêner le glissement de l'élément optique lorsque l'élément optique est tiré pour être extrait.

En outre, dans le cas où un élément de guidage ou un élément de poussage est inséré à l'intérieur de la gaine (cas de la troisième technique mentionnée précédemment), le filin peut dans certains cas, être entrainé à l'intérieur de la gaine de protection par l'élément de guidage ou l'élément de poussage. Au fur et à mesure de l'insertion de l'élément de guidage ou de l'élément de poussage, le filin est repoussé par l'élément de guidage. Le filin s'accumule dans la gaine jusqu'à former un bouchon. Une fois le bouchon formé, il n'est plus possible de continuer l'insertion de l'élément de guidage. Il s'avère alors impossible d'extraire un élément optique sur une grande longueur.

## PRESENTATION DE L'INVENTION

Un but de l'invention est de proposer un câble compact permettant d'extraire un ou plusieurs élément(s) optique(s) sur une grande longueur, supérieure à 60 centimètres, en particulier à partir d'une fenêtre unique.

Ce problème est résolu dans le cadre de la présente invention grâce à un câble de communication comprenant une gaine de protection délimitant une cavité interne, une âme optique de transmission de signaux de données optiques, l'âme optique s'étendant à l'intérieur de la cavité interne de manière à ménager dans la cavité interne un espace entre la gaine et l'âme, et un ou plusieurs filin(s) de maintien enroulé(s) autour de l'âme optique, dans lequel l'âme optique occupe au moins 30% de la cavité interne et l'ensemble du ou des filin(s) occupe moins de 0,5% en volume de l'espace ménagé entre la gaine et l'âme optique.

Du fait que le filin présente un encombrement limité, le filin peut être poussé à l'intérieur de la cavité interne du câble sur une grande longueur. Cela permet d'extraire une portion d'élément optique de grande longueur.

Le câble proposé peut en particulier présenter les caractéristiques suivantes :

- l'âme optique occupe au moins 50% de la cavité interne,
- l'âme optique est constituée d'une pluralité d'éléments optiques de transmission, assemblés entre eux selon un câblage en SZ,
- l'âme optique est constituée d'une pluralité d'éléments optiques de transmission, maintenus entre eux par le ou les filin(s) de maintien,
- le filin est constitué d'une mèche en polyamide présentant une masse linéaire de 110 décitex et occupant environ 0,098% en volume de l'espace ménagé entre la gaine et l'âme optique.

L'invention se rapporte également à un procédé d'extraction d'un élément optique de transmission dans un câble optique tel que défini précédemment, comprenant des étapes de :

- réaliser une ouverture unique dans la gaine de protection du câble,
- couper le filin à un premier point de coupe à travers l'ouverture,
- insérer un élément de guidage à l'intérieur de la cavité interne le long de l'élément à extraire pour guider un élément de coupe jusqu'à un deuxième point de coupe,
- actionner à distance l'élément de coupe pour provoquer la coupe de l'élément à extraire à l'endroit du deuxième point de coupe,
- extraire une portion de l'élément optique de transmission à travers l'ouverture,

dans lequel le deuxième point de coupe est situé à une distance du premier point de coupe supérieure à environ 60 centimètres.

Le procédé peut comprendre une étape de repousser le filin à l'intérieur de la cavité interne le long de l'âme optique. Cette étape de repoussage permet de libérer le faisceau d'éléments optiques. Elle peut être réalisée avant l'étape d'insertion de l'élément de guidage à l'intérieur de la cavité interne ou simultanément à cette étape.

PRESENTATION DES DESSINS

D'autres caractéristiques et avantages ressortiront encore de la description qui suit, laquelle est purement illustrative et non limitative, et doit être lue en regard des figures annexées, parmi lesquelles :

- la figure 1 représente de manière schématique en coupe longitudinale un câble optique conforme à un mode de réalisation de l'invention,
- la figure 2 représente de manière schématique en coupe transversale, un câble conforme à un mode de réalisation de l'invention,
- la figure 3 représente de manière schématique des étapes d'un procédé d'extraction conforme à un mode de réalisation de l'invention,
- la figure 4 est un diagramme représentant de manière schématique la longueur de repoussage du filin en fonction de son encombrement.

DESCRIPTION DETAILLEE D'UN MODE DE REALISATION

Sur les figures 1 et 2, le câble optique 1 représenté comprend une gaine 2 de protection délimitant une cavité interne 3, et une âme optique 4 de transmission de signaux de données optiques, l'âme optique 4 s'étendant à l'intérieur de la cavité interne 3.

L'âme optique 4 est constituée d'au moins un faisceau d'éléments optiques 5 assemblés entre eux selon un câblage en SZ. Les éléments optiques 5 peuvent être des fibres optiques nues, des fibres optiques munies d'une enveloppe, des modules incluant chacun plusieurs fibres optiques, des tubes contenant une ou plusieurs fibres optiques ou tous autres éléments permettant la transmission de signaux optiques.

Dans le cas du câble optique 1 représenté sur les figures 1 et 2, chaque élément optique 5 est un module constitué d'au moins une fibre optique 6 et d'une enveloppe 7 entourant la fibre optique.

En outre, le câble optique 1 comprend un filin 8 de maintien enroulé en hélice autour de l'âme optique 4, afin de maintenir les éléments optiques câblés.

L'âme optique 4 n'occupe pas la totalité du volume de la cavité interne 3. Plus précisément, la gaine 2 de protection et l'âme optique 4 sont agencées de manière à ménager dans la cavité interne 3 un espace 9 entre la gaine 2 et l'âme optique 4.

Toutefois, l'âme optique 4 occupe au moins 30% du volume de la cavité interne 3. Autrement dit, le volume apparent de l'âme optique 4 est supérieur ou égal à 30% du volume de la cavité interne 3.

Dans le cas du câble représenté sur les figures 1 et 2, le volume apparent de l'âme optique 4 est défini comme le volume du cylindre 11 qui enveloppe géométriquement le faisceau d'éléments 5. Le taux d'encombrement *t* de l'âme optique 4 par rapport à la cavité interne 3 est déterminé de la manière suivante.

$$t = \frac{{R_2}^2}{{R_1}^2}$$

où $R_1$ est le rayon interne de la gaine et $R_2$ est le rayon de l'âme optique.

Le volume de l'espace 9 est défini comme le volume de la cavité interne 3 auquel est soustrait le volume apparent de l'âme optique 4, ainsi que le volume d'éléments périphériques éventuellement présents dans le câble (non-représentés), tels que rubans, renforts de traction, éléments d'étanchéité et armure métallique.

Autrement dit, le volume de l'espace 9 est le volume disponible entre la gaine 2 de protection et l'âme optique 4 dans lequel s'étend le filin 8 de maintien.

Par exemple, dans le cas du câble représenté sur les figures 1 et 2, le volume de l'espace 9 est égal au volume de la cavité interne 3, auquel est soustrait le volume du cylindre 11 qui enveloppe géométriquement le faisceau d'éléments 5.

Dans le cas du câble représenté sur les figures 1 et 2, le taux d'encombrement r du filin 8 par rapport à l'espace disponible 9 est déterminé de la manière suivante.

A/ Cas d'un filin de section pleine (filin à un seul brin)

$$r = \frac{S \times c}{\pi R_1^2 - \pi R_2^2}$$

où S est la section du filin, c est un coefficient de pose, $R_1$ est le rayon interne de la gaine, et $R_2$ est le rayon de l'âme optique.
Le coefficient de pose c tient compte du pas d'enroulement du filin autour de l'âme. Il est déterminé de la manière suivante :

$$c = \frac{l_{filin}}{l_{\hat{a}me}}$$

où $l_{filin}$ est la longueur de filin à enrouler sur une longueur $l_{\hat{a}me}$ donnée.
B/ Cas d'un filin de section fibreuse (filin à plusieurs brins)

$$r = \frac{S' \times c}{\pi R_1^2 - \pi R_2^2}$$

où S' est la section apparente du filin, c est un coefficient de pose, $R_1$ est le rayon interne de la gaine, et $R_2$ est le rayon de l'âme optique.

La section apparente du filin est définie comme suit :

$$S' = \frac{m}{d \times f}$$

où m est la masse linéaire du filin (ou titrage), d est la densité du matériau du filin, et *f* est un facteur d'encombrement.
Le facteur d'encombrement permet de prendre en compte la structure fibreuse du filin. Ce facteur vaut sensiblement 0,7.
La figure 3 représente de manière schématique des étapes d'un procédé d'extraction 40 conforme à un mode de réalisation. Ce mode de réalisation nécessite l'utilisation d'un outil 24 d'extraction comprenant un élément de guidage 25 sous la forme d'un tube flexible, un élément de transmission 26 sous la forme d'un fil s'étendant à l'intérieur de l'élément de guidage et un élément de coupe 27 sous la forme d'un crochet ou d'une boucle formé(e) à une extrémité du fil.
Ce mode de réalisation peut nécessiter également l'utilisation d'un outil 28 de repoussage.
Selon une première étape 41, un opérateur réalise une ouverture 23 localisée unique dans la gaine 2, à l'endroit où il souhaite réaliser une dérivation.
Selon une deuxième étape 42, l'opérateur coupe le filin 8 en un point de coupe unique à travers l'ouverture 23.
Selon une troisième étape 43, l'opérateur insère l'outil 28 de repoussage à l'intérieur de la cavité interne 3 via l'ouverture 23. L'opérateur pousse l'outil 28 le long de l'âme optique 4, dans l'espace 9 disponible entre la gaine 2 et l'âme 4. A mesure de son avancement, l'outil 28 pousse le filin 8 à l'intérieur de la cavité interne 3, ce qui permet de libérer une portion du faisceau d'éléments optiques. Simultanément, les spires de filin s'accumulent en créant un bouchon 13 à proximité de l'extrémité de l'outil 28.
L'outil 28 peut ensuite être retiré du câble 1 par l'ouverture 23.
Selon une quatrième étape 44, l'opérateur sélectionne un élément optique 12 qu'il souhaite dériver et introduit l'élément optique 12 sélectionné dans la boucle 27 de l'outil 24 d'extraction.
Selon une cinquième étape 45, l'opérateur insère l'outil 24 d'extraction à l'intérieur de la cavité interne 3 via l'ouverture 23. Plus précisément, l'opérateur insère l'élément de guidage 25 à l'intérieur de la cavité interne 3. L'opérateur pousse l'élément de guidage 25 le long de l'élément optique 12 sélectionné jusqu'à ce qu'une extrémité de l'élément de guidage 25 se trouve à l'endroit d'un point de coupe désiré.
Durant l'introduction de l'élément de guidage 25 à l'intérieur de la cavité interne 3, la boucle 27 coulisse le long de l'élément optique 12. L'élément de guidage 25 est ainsi guidé à l'intérieur de la cavité interne 3 du câble.
Selon une sixième étape 46, l'opérateur tire sur le fil 26, ce qui a pour effet de faire coulisser le fil 26 à l'intérieur de l'élément de guidage 25 et par conséquent de faire pénétrer la boucle 27 à l'intérieur du tube 25. En pénétrant à l'intérieur de l'élément de guidage 25, la boucle rompt l'élément optique à l'endroit du point de coupe.

L'élément de guidage 25 peut ensuite être retiré du câble 1 par l'ouverture 23.

Selon une septième étape 47, l'opérateur extrait une portion sectionnée de l'élément optique 12 par l'ouverture 23. La portion d'élément optique 12 extraite peut ensuite être utilisée pour réaliser une dérivation.

Du fait que le filin présente un encombrement limité, le filin peut être poussé sur une grande longueur à l'intérieur de la cavité interne du câble avant que le filin ne forme un bouchon. Cela permet d'extraire une portion d'élément de grande longueur.

Dans le deuxième mode de réalisation qui vient d'être décrit, les étapes 43 et 45 sont réalisées successivement.

Dans une variante de mise en oeuvre de ce deuxième mode de réalisation, les étapes 43 et 45 sont réalisées simultanément. Autrement dit, le repoussage du filin est réalisé en même temps que l'insertion de l'outil d'extraction.

Dans ce cas, l'outil 24 d'extraction et l'outil 28 de repoussage peuvent être un seul et même outil, le repoussage du filin étant réalisé par exemple par l'élément de guidage 25.

EXEMPLE

On fabrique un câble optique présentant les caractéristiques suivantes :

> Une gaine de protection est formée d'un tube en polyéthylène et incluant deux porteurs rigides noyés dans le tube et disposés en des positions diamétralement opposées. La gaine de protection forme une cavité interne présentant un diamètre moyen de 6 millimètres.

Le câble comprend une âme optique assemblée en SZ présentant un diamètre apparent de 4 millimètres.

L'assemblage est maintenu par un filin de maintien en polyamide présentant un titrage de 110 décitex (1 décitex = $10^{-7}$ kilogramme par mètre). Le filin est enroulé en hélice autour de l'âme avec un pas d'enroulement de 50 millimètres.

Lorsque l'on utilise le procédé d'extraction 40 conforme au mode de réalisation de la figure 3, le filin peut être repoussé sur une longueur de 80 centimètres.

Le tableau qui suit permet de comparer la longueur de repoussage (c'est-à-dire la longueur sur laquelle le filin peut être repoussé jusqu'à former un bouchon) obtenue respectivement dans un câble optique réalisé conformément à l'exemple et dans un câble optique de référence.

| | Câble optique de référence | Câble optique réalisé selon l'exemple |
|---|---|---|
| Diamètre externe de la gaine | 10 millimètres | 10 millimètres |
| Diamètre interne de la gaine | 6 millimètres | 6 millimètres |
| Diamètre externe de l'âme optique | 4 millimètres | 4 millimètres |
| Espace disponible | 15700 $mm^3$ par mètre de câble | 15700 $mm^3$ par mètre de câble |
| Taux d'occupation de l'âme optique | 44% | 44% |
| Filin | Polyester 1650 décitex | Polyamide 110 décitex |
| Section | 0,17 $mm^2$ | 0,014 $mm^2$ |
| Pas d'enroulement | 50 millimètres | 50 millimètres |
| Volume occupé par le filin | 177 $mm^3$ par mètre de câble | 15,3 $mm^3$ par mètre de câble |
| **Taux d'encombrement** | **1,12 %** | **0,098 %** |
| **Longueur de repoussage** | **40 centimètres** | **80 centimètres** |

La figure 4 est un diagramme représentant de manière schématique la longueur de repoussage théorique du filin (en centimètres) en fonction de son taux d'encombrement (% en volume de l'espace ménagé entre la gaine et l'âme optique). On constate qu'une longueur de repoussage supérieure à 60 centimètre est obtenue lorsque le filin occupe moins de 0,5% en volume de l'espace ménagé entre la gaine et l'âme optique

L'invention permet de dériver des portions d'éléments de longueur importante, pouvant aller d'environ 60 centimètres à quelques mètres.

**Revendications**

1. Câble de communication (1) comprenant une gaine de protection (2) délimitant une cavité interne (3), une âme optique (4) de transmission de signaux de données optiques, l'âme optique (4) s'étendant à l'intérieur de la cavité interne (3) de manière à ménager dans la cavité interne un espace (9) entre la gaine et l'âme, et un ou plusieurs filin(s) (8) de maintien enroulé(s) autour de l'âme optique (4), dans lequel l'âme optique (4) occupe au moins 30% de la cavité interne et l'ensemble du ou des filin(s) (8) occupe moins de 0,5% en volume de l'espace (9) ménagé entre la gaine (2) et l'âme optique (4).

2. Câble optique selon la revendication 1, dans lequel l'âme optique occupe au moins 50% de la cavité interne.

3. Câble selon l'une des revendications 1 ou 2, dans lequel l'âme optique (4) est constituée d'une pluralité d'éléments (5) optiques de transmission, assemblés entre eux selon un câblage en SZ.

4. Câble selon l'une des revendications 1 à 3, dans lequel l'âme optique (4) est constituée d'une pluralité d'éléments (5) optiques de transmission, maintenus entre eux par le ou les filin(s) de maintien (8).

5. Câble selon l'une des revendications qui précèdent, dans lequel le filin (8) est constitué d'une mèche en polyamide présentant une masse linéaire de 110 décitex et occupant environ 0,098% en volume de l'espace ménagé entre la gaine (2) et l'âme optique (4).

6. Procédé (40) d'extraction d'un élément (12) optique de transmission dans un câble optique conforme à l'une des revendications 1 à 5 ayant une âme optique (4) constituée d'une pluralité d'éléments (5) optique de transmission, le procédé comprenant des étapes de :

   - (41) réaliser une ouverture unique (23) dans la gaine de protection (2) du câble,
   - (42) couper le filin (8) à un premier point de coupe à travers l'ouverture (23),
   - (45) insérer un élément de guidage (25) à l'intérieur de la cavité interne (3) le long de l'élément (12) à extraire pour guider un élément de coupe (27) jusqu'à un deuxième point de coupe,
   - (46) actionner à distance l'élément de coupe (27) pour provoquer la coupe de l'élément (12) à extraire à l'endroit du deuxième point de coupe,
   - (47) extraire une portion de l'élément (12) optique de transmission à travers l'ouverture (23),

   dans lequel le deuxième point de coupe est situé à une distance du premier point de coupe supérieure à environ 60 centimètres.

7. Procédé selon la revendication 6, comprenant une étape de :

   - (43) repousser le filin (8) à l'intérieur de la cavité interne (3) le long de l'âme optique (4).

**Patentansprüche**

1. Kommunikationskabel (1), umfassend eine Schutzummantelung (2), die eine interne Ausnehmung (3) begrenzt, einen optischen Kern (4) zur Übertragung von optischen Datensignalen, wobei der optische Kern (4) sich im Innern der internen Ausnehmung (3) derart erstreckt, dass in der internen Ausnehmung ein Raum (9) zwischen der Ummantelung und dem Kern ausgespart ist, und ein oder mehrere Haltetau(e) (8) rund um den optischen Kern (4) aufgewickelt sind, in dem der optische Kern (4) wenigstens 30 % der internen Ausnehmung einnimmt und die Gruppe des Taus / der Taue (8) wenigstens 0,5 Vol.-% des zwischen der Ummantelung (2) und dem optischen Kern (4) ausgesparten Raums (9) einnimmt.

2. Optisches Kabel gemäß Anspruch 1, bei dem der genannte optische Kern wenigstens 50 % der internen Ausnehmung einnimmt.

3. Kabel gemäß irgendeinem der Ansprüche 1 oder 2, bei dem der optische Kern (4) aus einer Vielzahl von optischen Elementen (5) zur Übertragung gebildet ist, die untereinander gemäß einer Verkabelung in SZ zusammengebaut sind.

4. Kabel gemäß irgendeinem der Ansprüche 1 bis 3, bei dem der optische Kern (4) aus einer Vielzahl von optischen Elementen (5) zur Übertragung gebildet ist, die untereinander durch das oder die Haltetau(e) (8) gehalten werden.

5. Kabel gemäß irgendeinem der voranstehenden Ansprüche, bei dem das Tau (8) aus einem Faserband aus Polyamid gebildet ist, das eine lineare Masse aus 110 Decitex aufweist und ungefähr 0,098 Vol.-% des zwischen der Ummantelung (2) und dem optischen Kern (4) ausgesparten Raums einnimmt.

6. Verfahren (40) zum Extrahieren eines optischen Elements (12) zur Übertragung in einem Lichtleiterkabel gemäß irgendeinem der Ansprüche 1 bis 5, das einen optischen Kern (4) hat, der aus einer Vielzahl von optischen Elementen (5) zur Übertragung gebildet ist, umfassend die Schritte:

- (41) Realisieren einer einzigartigen Öffnung (23) in der Schutzummantelung (2) des Kabels,
- (42) Schneiden des Taus (8) an einem ersten Schnittpunkt durch die Öffnung,
- (45) Einfügen eines Führungselements (25) in das Innere der internen Ausnehmung (3) entlang des zu extrahierenden Elements (12) zum Führen eines Schnittelements (27) bis zu einem zweiten Schnittpunkt,
- (46) entferntes Betätigen des Schnittelements (27), um den Schnitt des zu extrahierenden Elements (12) an der Stelle des zweiten Schnittpunktes hervorzurufen,
- (47) Extrahieren eines Abschnitts des optischen Elements (12) zur Übertragung durch die Öffnung (23), wobei der zweite Schnittpunkt sich in einer Entfernung vom ersten Schnittpunkt von mehr als ungefähr 60 Zentimetern befindet.

7. Verfahren gemäß Anspruch 6, umfassend einen Schritt:

- (43) Zurückschieben des Taus (8) im Innern der internehmen Ausnehmung (3) entlang des optischen Kerns (4).

## Claims

1. Communication cable (1) comprising a protective sheath (2) delimiting an internal cavity (3), an optical core (4) for transmitting optical data signals, the optical core (4) extending inside the internal cavity (3) so as to define a space (9), in the internal cavity, between the sheath and the core, and one or more maintaining chord(s) (8) wound around the optical core (4), wherein the optical core (4) occupies at least 30% of the internal cavity and the set of chord (s) (8) occupies less than 0.5% by volume of the space (9) defined between the sheath (2) and the optical core (4).

2. Optical cable according to claim 1, wherein the optical core occupies at least 50% of the internal cavity.

3. Cable according to one of claims 1 or 2, wherein the optical core (4) consists of a plurality of transmission optical elements (5), assembled together according to SZ cabling.

4. Cable according to one of claims 1 to 3, wherein the optical core (4) consists of a plurality of transmission optical elements (5), held together by the maintaining chord(s) (8).

5. Cable according to one of the preceding claims, wherein the chord (8) consists of a polyamide roving having a linear mass of 110 decitex and occupying around 0.098% by volume of the space defined between the sheath (2) and the optical core (4).

6. Method (40) for extracting a transmission optical element (12) in an optical cable according to one of claims 1 to 5 having an optical core (4) consisting of a plurality of transmission optical elements (5), the method comprising the steps of:

- (41) making a single opening (23) in the protective sheath (2) of the cable,
- (42) cutting the chord (8) at a first cutting point through the opening (23),
- (45) inserting a guiding element (25) inside the internal cavity (3) along the element (12) to extract to guide a cutting element (27) up to a second cutting point,
- (46) remotely actuating the cutting element (27) to cause the cutting of the element (12) to extract at the second cutting point,
- (47) extracting a portion of the transmission optical element (12) through the opening (23),

wherein the second cutting point is situated at a distance from the first cutting point greater than around 60 centimetres.

**7.** Method according to claim 6, comprising a step of:

- (43) pushing the chord (8) back inside the internal cavity (3) along the optical core (4).

FIG. 1

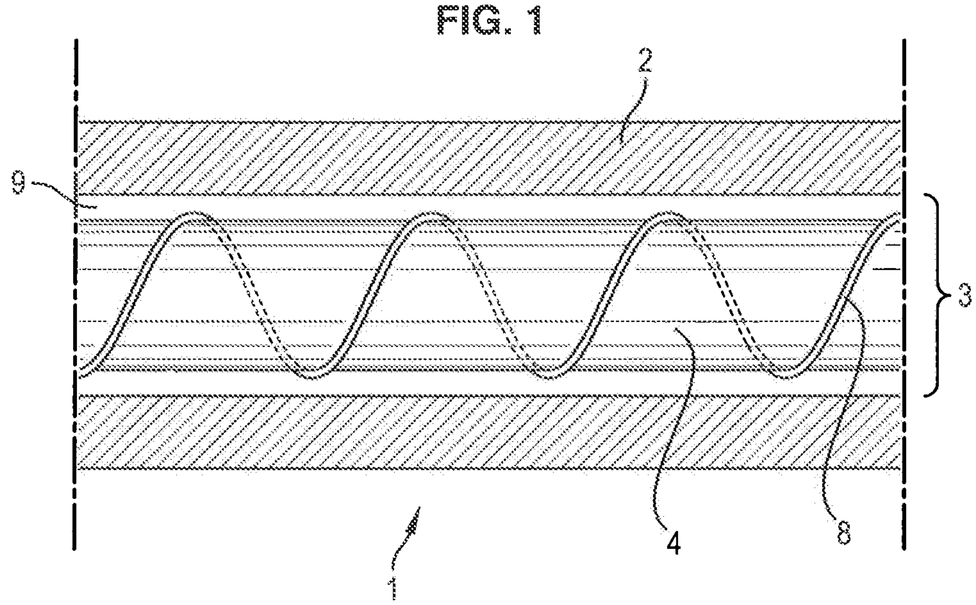


FIG. 2

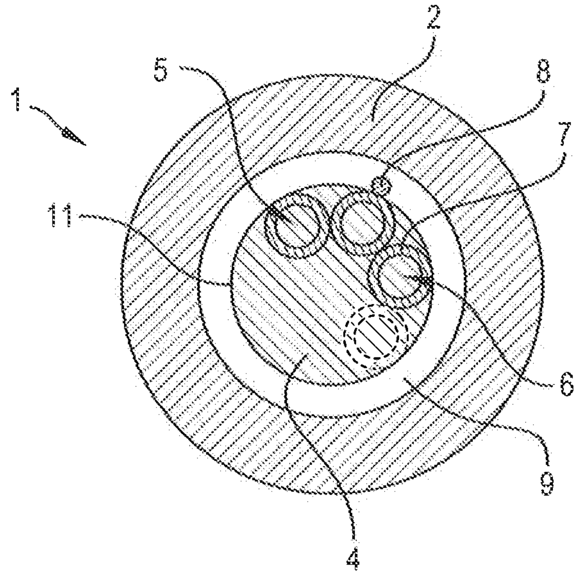

FIG. 3

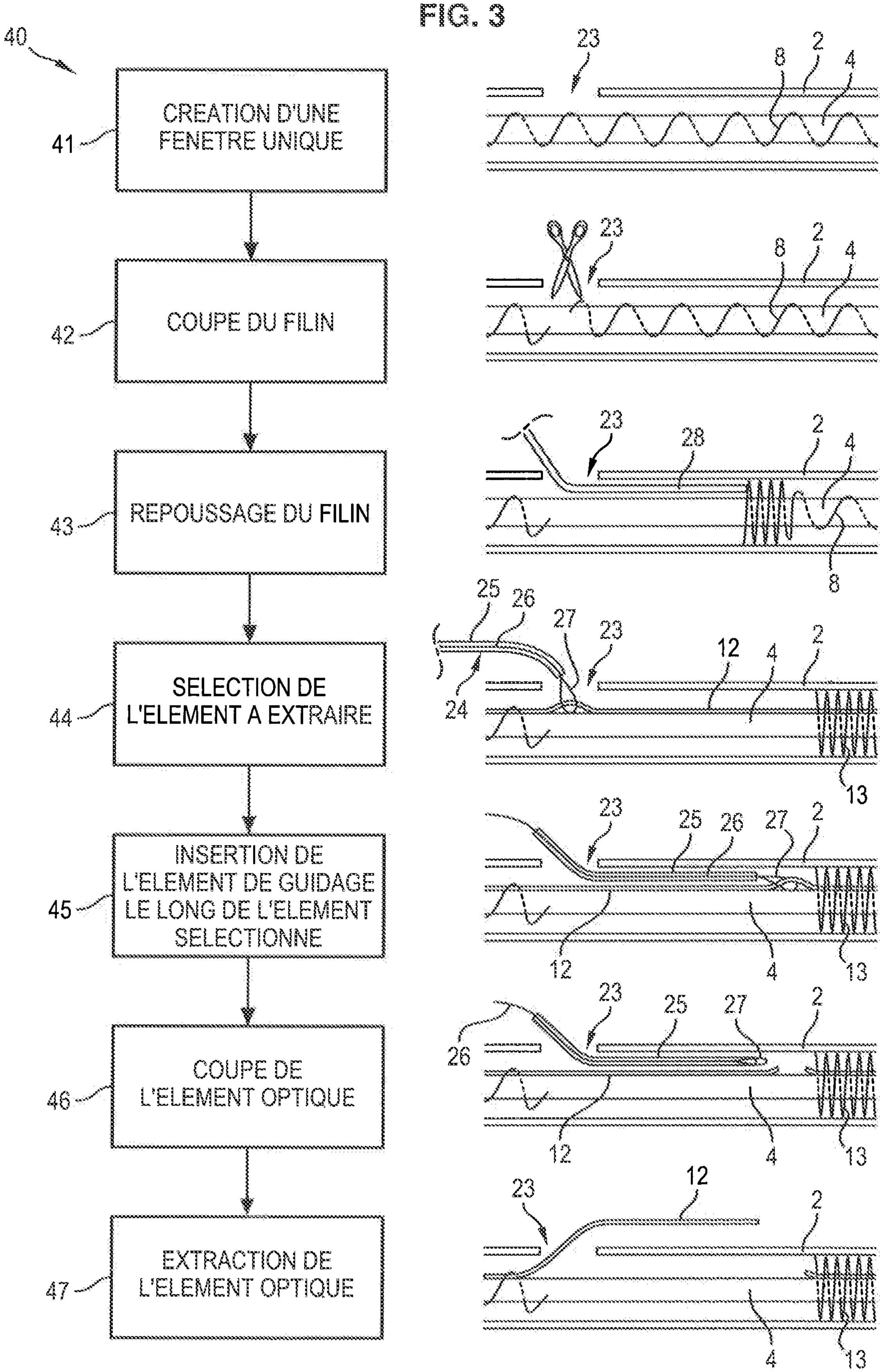
40
41
CREATION D'UNE FENETRE UNIQUE
42
COUPE DU FILIN
43
REPOUSSAGE DU FILIN
44
SELECTION DE L'ELEMENT A EXTRAIRE
45
INSERTION DE L'ELEMENT DE GUIDAGE LE LONG DE L'ELEMENT SELECTIONNE
46
COUPE DE L'ELEMENT OPTIQUE
47
EXTRACTION DE L'ELEMENT OPTIQUE
23
8
2
4
28
25
26
27
24
12
13

FIG. 4

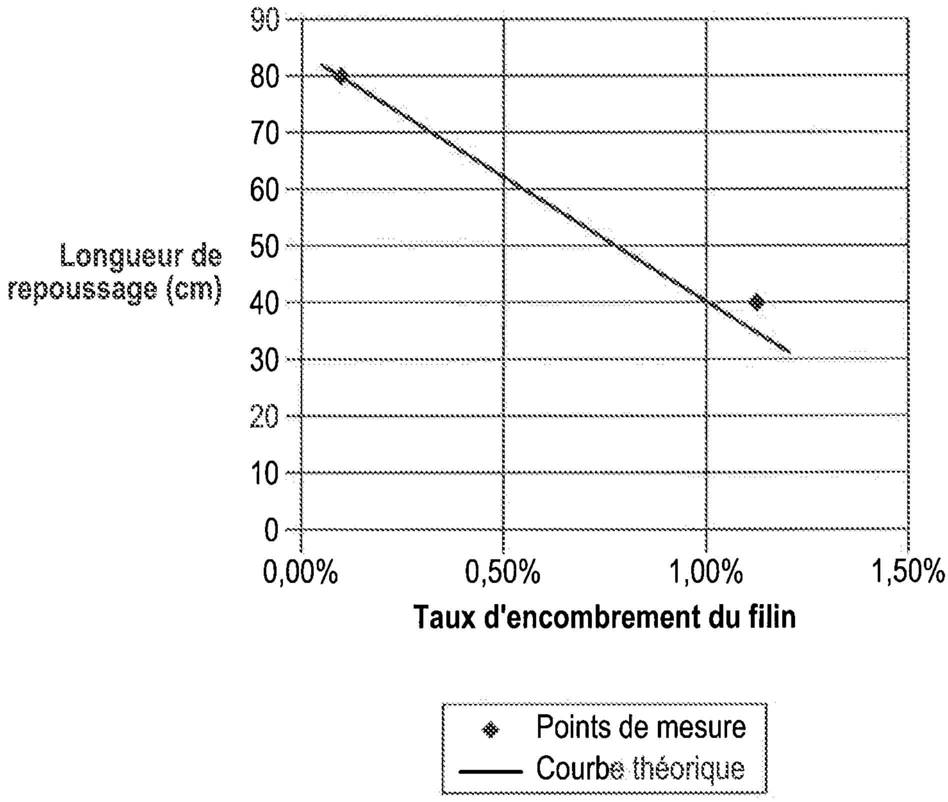
Longueur de repoussage (cm)
90
80
70
60
50
40
30
20
10
0
0,00%
0,50%
1,00%
1,50%
Taux d'encombrement du filin
Points de mesure
Courbe théorique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2810747 A1